(19) **Europäisches Patentamt**
**European Patent Office**
**Office européen des brevets**

(11) **EP 4 485 388 A1**

(12) **EUROPEAN PATENT APPLICATION**

(43) Date of publication:
**01.01.2025 Bulletin 2025/01**

(21) Application number: **24184452.1**

(22) Date of filing: **25.06.2024**

(51) International Patent Classification (IPC):
**G06V 20/52** *(2022.01)*

(52) Cooperative Patent Classification (CPC):
**G06V 20/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 JP 2023105108**

(71) Applicant: **Canon Kabushiki Kaisha**
**Ohta-Ku**
**Tokyo 1468501 (JP)**

(72) Inventor: **YAMAMOTO, Shinji**
**146-8501 Tokyo (JP)**

(74) Representative: **Canon Europe Limited**
**European Intellectual Property Group**
**4 Roundwood Avenue**
**Stockley Park**
**Uxbridge UB11 1AF (GB)**

(54) **IMAGE PROCESSING APPARATUS, IMAGE PROCESSING METHOD, AND PROGRAM**

(57) An image processing apparatus 100 includes one or more memories storing instructions, and one or more processors that, upon execution of the stored instructions, are configured to specify, through a posture estimation unit 102, a position of an organ of a person in an image, acquire posture estimation information, through the posture estimation unit 102, about a posture of the person based on the specified position of the organ, estimate, through a action recognition unit 103, an action of the person based on the acquired posture estimation information, determine, through a correction condition determination unit 104, a state of the person based on the acquired posture estimation information, and change information, through a correction unit 105, indicating the estimated action of the person in a case where the estimated action of the person is a predetermined action and it is determined that the person is in a predetermined state.

**FIG.2**

EP 4 485 388 A1

**Description**

BACKGROUND OF THE INVENTION

Field of the Invention

The present disclosure relates to a technique for action recognition.

Description of the Related Art

To detect an action and a situation of a person, a posture estimation technique and an action recognition technique have been developed. In the posture estimation technique, positions of organs, such as joint points, eyes, and ears, of a person in an image can be detected by using a convolutional neural network (CNN) using the image as an input. In the action recognition technique, actions can be classified by using the CNN using, as inputs, positions of the organs detected with the posture estimation technique. The action recognition technique is used for, for example, purchase analysis in a store and detection of a fallen person in a hospital and the like. In the posture estimation technique, however, when an organ is occluded by an object, such as a shelf, image features of the organ cannot be acquired. Thus, accuracy of posture estimation may be degraded.

In the posture estimation technique, as means for addressing occlusion of an organ of an objective person, a method in which an image including an occluded organ is created through image combination or the like, and training data is enhanced using data extension of occlusion, to improve performance is generally used. Z. Zhong, "Random Erasing Data Augmentation", CVPR2017. discusses a method in which pseudo-occlusion is generated by combining a mask at a random position in an image of training data, to improve organ detection accuracy for occlusion.

With the method discussed in Z. Zhong, "Random Erasing Data Augmentation", CVPR2017, it is possible to improve accuracy of posture estimation in a state where a part of an organ of the person is occluded and a position of the organ is not acquired. However, for example, in a case where a pattern resembled to an organ of the person is present in an area of a lower-half body in a state where the lower-half body is occluded by a shelf or a desk, the pattern is erroneously detected as an organ, such as a knee or an ankle, in some cases. As a result, posture estimation accuracy may be degraded, and an incorrect action may be output as a recognition result in action recognition using a result of the posture estimation.

The present disclosure is made in consideration of the above-described issues. The present disclosure is directed to a technique for preventing an output of an incorrect action recognition as a result of action recognition using posture estimation.

SUMMARY OF THE INVENTION

According to a first aspect of the present invention, there is provided an image processing apparatus as specified in claim 1. Optional features of the first aspect are presented in claims 2 to 10. According to a second aspect of the present invention, there is provided an image processing method as specified in claim 11. According to a third aspect of the present invention, there is provided a program as specified in claim 12. Optional features of the second aspect and the third aspect are presented in or derivable from claims 2 to 10.

Further features of the present invention will become apparent from the following description of embodiments with reference to the attached drawings.

BRIEF DESCRIPTION OF THE DRAWINGS

Fig. 1 is a diagram illustrating a hardware configuration of an image processing apparatus.
Fig. 2 is a diagram illustrating a configuration of an image processing apparatus according to a first embodiment.
Fig. 3 is a diagram illustrating an example of posture estimation and action recognition.
Fig. 4 is a diagram illustrating an example of a determination result of correction conditions.
Fig. 5 is a diagram illustrating an example of an action recognition result to be corrected.
Fig. 6 is a flowchart illustrating processing to be performed by the image processing apparatus according to the first embodiment.
Fig. 7 is a diagram illustrating a configuration of an image processing apparatus according to a second embodiment.
Fig. 8 is a flowchart illustrating processing to be performed by the image processing apparatus according to the second embodiment.

Fig. 9 is a diagram illustrating generation of correction area information.

Fig. 10 is a diagram illustrating generation of the correction area information.

Fig. 11 is a diagram illustrating a configuration of an image processing apparatus according to a third embodiment.

Fig. 12 is a flowchart illustrating processing to be performed by the image processing apparatus according to the third embodiment.

Figs. 13A to 13C are diagrams illustrating examples of actual scene clusters and ground truth (GT) clusters corresponding to the correction conditions.

DESCRIPTION OF THE EMBODIMENTS

Some embodiments of the present disclosure are described below with reference to the accompanying drawings. Components, elements or features described in the following embodiments are example of components, elements or features which are used to carry the present invention into effect, and are not intended to limit the present invention thereto. That is to say that the invention does not require all such components, elements or features described in relation to one or more of the embodiments.

In a first embodiment, a description will be provided of an image processing apparatus that estimates a posture of a person in an image acquired by an installed imaging apparatus (camera) and estimates an action of the person based on a result of the posture estimation as an example of action recognition. The image processing apparatus determines a state of the person based on the result of the posture estimation, and changes (corrects) information indicating an estimated action of the person based on a determination result.

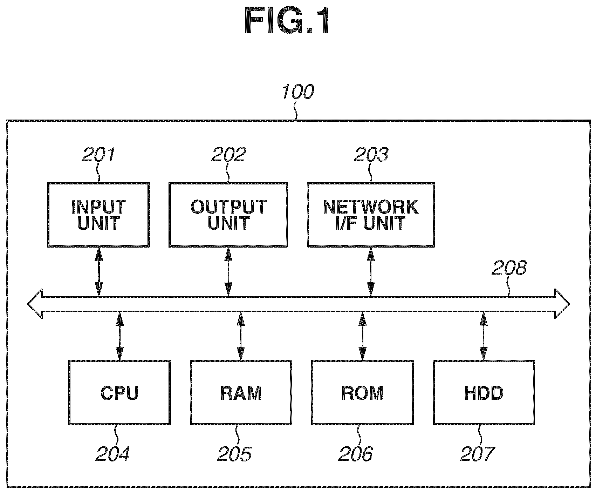

Fig. 1 is a diagram illustrating a hardware configuration of an image processing apparatus 100 according to the present embodiment. The image processing apparatus 100 includes an input unit 201, an output unit 202, a network interface (I/F) unit 203, a central processing unit (CPU) 204, a random access memory (RAM) 205, a read only memory (ROM) 206, a hard disk drive (HDD) 207, and a data bus 208.

The CPU 204 reads out control computer programs stored in the ROM 206 and/or the HDD 207 and loads the programs to the RAM 205 to perform various types of processing. The RAM 205 is used as a storage area temporarily storing programs to be executed by the CPU 204, a work memory, and the like. The network I/F unit 203 transmits/receives various types of information between the image processing apparatus 100 and another apparatus through the Internet or other network. Data received from an external apparatus through the network I/F unit 203 is transmitted to or received from the CPU 204, the RAM 205, and the ROM 206 through the data bus 208. The HDD 207 stores image data, setting parameters, various types of programs, and the like. The HDD 207 can receive data from an external apparatus through the network I/F unit 203.

The input unit 201 is an input device, such as a keyboard, a mouse, and/or a touch panel. The output unit 202 is a device that outputs information. Examples of the output unit 202 include a display device, such as a liquid crystal display, and an audio output device, such as a speaker. The input unit 201 and the output unit 202 are also connected to the data bus 208.

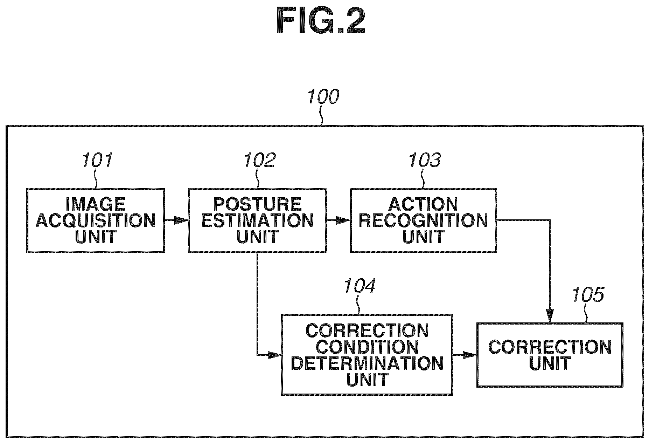

Fig. 2 is a diagram illustrating a functional configuration of the image processing apparatus 100 according to the present embodiment.

The image processing apparatus 100 includes an image acquisition unit 101, a posture estimation unit 102, an action recognition unit 103, a correction condition determination unit 104, and a correction unit 105.

The image acquisition unit 101 acquires an image. The image acquired by the image acquisition unit 101 may be an image acquired through imaging by a network camera or the like, or an image recorded in a storage device, such as a hard disk. The image acquired by the image acquisition unit 101 may be received through a network such as the Internet. The image acquired by the image acquisition unit 101 is transmitted to the posture estimation unit 102.

The posture estimation unit 102 detects organs of a person in the image, and specifies positions of the detected organs. The organs are, for example, parts (joint points) such as eyes, a nose, ears, shoulders, elbows, wrists, hips, knees, and ankles of the person. The organs may be considered as parts of the body. The parts of the body may include sense organs, such as eyes, nose, ears, or joint points, such as shoulders, elbows, wrists, hips, knees or ankles. The posture estimation unit 102 acquires posture estimation information based on the specified positions of the organs. The posture estimation information includes organ position coordinates that are positional information indicating positions of the organs, and an organ detection likelihood indicating a likelihood for the position of each of the organs. The organ detection likelihood is likelihood information indicating a likelihood for the position of each of the organs detected by the posture estimation unit 102. The organ detection likelihood can be restated as information indicating reliability, accuracy, or certainty of the position of each of the organs.

The posture estimation information includes at least one of a person rectangle enclosing an area of a person in the image and a detection likelihood for the person rectangle. The posture estimation information includes a full-body rectangle enclosing a full body of a person including a portion invisible in the image and a full-body detection likelihood. The person rectangle and the full-body rectangle are information enabling identification of the areas including the full-body of the person, and the shapes thereof are not limited to the rectangles. The person rectangle may be considered a person bounding box which bounds the person in any shape. The full-body rectangle may be considered a full-body bounding box which bounds the full-body of the person in any shape. The posture estimation information includes an identifier of the person. The identifier of the person may be a scalar value indicating the same person among frames. For example, in a case where an identifier 1 is assigned to a person A in one of image frames continuously captured by the imaging apparatus, the identifier 1 is assigned to the person A in a next frame, to indicate the same person. The information included in the posture estimation information is not limited to the above-described information, and the posture estimation information may include information other than the above-described information, or may include optional information out of the above-described information. The posture estimation information according to the present embodiment at least includes the organ posture coordinates.

As an example of the posture estimation, in a case where a body below the hips of the person in the image is occluded by, for example, a shield, a lower end of the person rectangle is positioned at the hips, and a lower end of the full-body rectangle is positioned at the feet. The position of the feet is estimated from an upper-half body. The posture estimation unit 102 determines coordinates of a center, a width, a height, and the detection likelihood for the person rectangle by using a convolutional neural network (CNN) with an image as an input, as discussed in J. Redmon, "You Only Look Once: Unified, Real-Time Object Detection", CVPR2015. Coordinates of a center, a width, and a height of the full-body rectangle, and the full-body detection likelihood are also determined by a method discussed in J. Redmon, "You Only Look Once: Unified, Real-Time Object Detection", CVPR2015., by replacing training data in the CNN with the full-body rectangle. The posture estimation unit 102 determines the organ position coordinates and the organ detection likelihood for the person rectangle by using the CNN with, as an input, an image extracted from the image based on information about the person rectangle, as discussed in K. Sun, "Deep High-Resolution Representation Learning for Human Pose Estimation", CVPR2019. Further, the posture estimation unit 102 determines a feature amount for re-collating a person among the frames, by using the CNN with, as an input, an image extracted from an image based on the information about the person rectangle, as discussed in Y. Zhang, "FairMOT: On the Fairness of Detection and Re-Identification in Multiple Object Tracking", IJCV2021. The posture estimation unit 102 assigns the identifier to the person by re-collating the person among the frames.

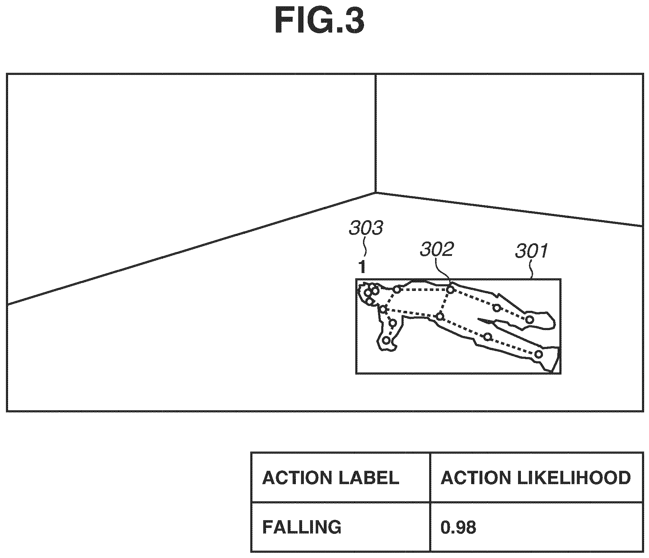

Fig. 3 illustrates an example of the posture estimation information for the image. Posture estimation processing is applied to the image, thus obtaining a person rectangle 301, organ position coordinates 302, and a person identifier 303. In the example illustrated in Fig. 3, the person identifier is "1". The posture estimation unit 102 transmits the posture estimation information to the action recognition unit 103 and the correction condition determination unit 104.

The action recognition unit 103 estimates an action of a person with the posture estimation information as an input, and generates information indicating the estimated action. The action recognition unit 103 determines an action based on the information indicating the estimated action, to be a result of action recognition of the person in the image. The information indicating an action includes an action label indicating an action of the person, and an action likelihood for the action label. One or more action labels are previously defined in correspondence, i.e. in relation, to actions to be recognized. The action labels may be predefined, i.e. specified, for a particular action. The image processing apparatus 100 according to the present embodiment recognizes a falling action of a person. Thus, in the present embodiment, an action label "falling" is defined. The action likelihood is likelihood information indicating a likelihood (reliability) of the estimated action of the person. The action likelihood is represented by a value from 0 to 1, and indicates higher possibility of the action as the value is closer to 1. The action label is illustrative, and another action may be defined as the action label. Two or more actions may be defined as action labels.

The action recognition unit 103 recognizes an action based on time-series change in organ position determined from the organ position coordinates of the person in a plurality of image frames, as discussed in F. Yang, "Make Skeleton-based Action Recognition Model Smaller, Faster and Better", CVPR2019. As an example, action recognition processing is applied to the image illustrated in Fig. 3 to generate, as a value of 0.98 or the like, the action likelihood corresponding to the action label "falling". The action recognition unit 103 recognizes that the action of the person is "falling" based on the generated information. The action recognition unit 103 recognizes an action indicated by the action label corresponding to the action likelihood greater than a predetermined threshold, as the action of the person. The action recognition unit 103 transmits the information indicating the action to the correction unit 105.

The correction condition determination unit 104 determines the state of the person having been subjected to the posture estimation by the posture estimation unit 102 with the posture estimation unit providing an input, thus generating a determination result. At this time, the correction condition determination unit 104 determines whether the person is in a predetermined state. In the following, a condition that the person is in the predetermined state is referred to as a correction condition, and the correction condition determination unit 104 generates a result of determination as to whether the person satisfies the correction condition, as the determination result. Correction means that the correction unit 105 described below changes the information indicating the action generated by the action recognition unit 103.

The determination result generated by the correction condition determination unit 104 includes a correction label indicating the correction condition, and a correction likelihood indicating a degree of the correction to be made.

The correction label is a label indicating the correction condition, in other words, a label indicating a possible predetermined state of the person. In the present embodiment, as the correction labels, "lower-half body occlusion" indicating a state where a lower-half body of a person is occluded, "cutoff" indicating a state where part of a person protrudes from the image, and "background erroneous detection" indicating a state where a background is erroneously detected as a person are defined. Further, in the present embodiment, as the correction label, "movement" indicating a state where a person is moving is defined. The correction likelihood is represented by a value from 0 to 1, and indicates a higher degree of the correction to be made as the value is closer to 1. In other words, the correction likelihood is likelihood information indicating a likelihood (reliability) for the state of the person determined by the correction condition determination unit 104.

Issues targeted to be solved in the present embodiment and other embodiments of the invention are now described. The image processing apparatus 100 according to the present embodiment recognizes a falling action of a person, and outputs a recognition result to use the recognition result for, for example, notification to a user. However, the organ positions of the person are erroneously detected in some cases due to occlusion of the person by an object, part of the person is cut off in (protrude from) the image, or erroneous detection of a background as the person. In this case, there is an issue that the person is erroneously recognized as being fallen. The correction condition determination unit 104 determines the correction condition that a state of a person is in a state where the person is erroneously recognized as being fallen, and determines the correction likelihood corresponding to the correction condition, thus enabling correction of the result of the action recognition.

The correction conditions for determining the correction likelihood corresponding to the respective correction labels are described below. The correction likelihood is calculated based on the posture estimation information acquired from the posture estimation unit 102. The correction likelihood for "lower-half body occlusion" is calculated so as to become higher as more conditions among the following conditions are satisfied.

- Average of y-coordinates of right and left hip joint points is greater than y-coordinate of lower end of person rectangle
- Full-body detection likelihood is less than detection likelihood for person rectangle
- Distance between y-coordinate of lower end of person rectangle and y-coordinate of lower end of full-body rectangle is large
- Organ detection likelihoods for hips, knees, and ankles are low

At this time, calculation expressions are as follows.

[Equations 1]

$$S_{occlusion} = \frac{(hip_{position} + body_{score} + body_{size} + lower_{score})}{4}$$

$$hip_{position} = max\left(1.0, \frac{average(p_{lhip}.y, p_{rhip}.y) - R_{body}.y}{R_{fullbody}.rby - R_{fullbody}.lty}\right)$$

$$body_{score} = R_{body}.score - R_{fullbody}.score$$

$$body_{size} = \frac{R_{fullbody}.rby - R_{body}.rby}{R_{fullbody}.rby - R_{fullbody}.lty}$$

$$lower_{score} = 1.0 - (average(p_{lhip}.score, p_{rhip}.score) + average(p_{lknee}.score, p_{rknee}.score) + average(p_{lankle}.score, p_{rankle}.score))/3$$

The correction likelihood for "cutoff" is calculated so as to become higher as more conditions among the following conditions are satisfied.

- Average of y-coordinates of right and left shoulder joint points or right and left hip joint points is close to lower end of image
- Y-coordinate of lower end of person rectangle is close to lower end of image
- Y-coordinate of lower end of full-body rectangle is greater than image height

At this time, calculation expressions are as follows. A numerical value of 0.95 in the expressions is a parameter changed depending on an imaging condition and the like, and the parameter is not limited to a specific value.

[Equations 2]

$$S_{cutoff} = \frac{max(shoulder_{edge}, hip_{edge}) + body_{edge} + fullbody_{edge}}{3}$$

$$shoulder_{edge} = min(0.0, \frac{average(p_{lshoulder}.y, p_{rshoulder}.y) - image.height \times 0.95}{R_{body}.rby - R_{body}.lty})$$

$$hip_{edge} = min(0.0, \frac{average(p_{lhip}.y, p_{rhip}.y) - image.height \times 0.95}{R_{body}.rby - R_{body}.lty})$$

$$body_{edge} = min(0.0, \frac{R_{body}.rby - image.height \times 0.95}{R_{body}.rby - R_{body}.lty})$$

$$fullbody_{edge} = max(1.0, \frac{R_{fullbody}.rby - image.height}{R_{fullbody}.rby - R_{fullbody}.lty})$$

The correction likelihood for "background erroneous detection" is calculated so as to become higher as more conditions among the following conditions are satisfied.

- All organ detection likelihoods are low
- Detection likelihood for person rectangle and full-body detection likelihood are low

At this time, calculation expressions are as follows. A numerical value of 0.2 in the expressions is a parameter to be changed depending on the imaging condition and the like, and the parameter is not limited to a specific value.

[Equations 3]

$$S_{background} = \frac{keypoint_{score} + Rect_{score}}{2}$$

$$keypoint_{score} = \sum_{i}^{all\_parts} (if \ p_i.score < 0.2 \ \frac{1.0}{num \ of \ keypoints} \ else \ 0.0)$$

$$Rect_{score} = if \ (R_{body}.score < 0.2 \ and \ R_{fullbody}.score < 0.2) \ 1.0 \ else \ 0.0$$

The correction likelihood for "movement" is calculated so as to become higher as more conditions among the following conditions are satisfied.

- Moving distance of center coordinates of person rectangle between image frames is large

At this time, a calculation expression is as follows.

[Equation 4]

$$S_{move} = max(1.0, \frac{\sqrt{(R_{body}.x^t - R_{body}.x^{t-1})^2 + (R_{body}.y^t - R_{body}.y^{t-1})^2}}{R_{body}.rby^t - R_{body}.lty^t})$$

In the above-described Equations 1 to 4, $S_{occlusion}$, $S_{cutoff}$, $S_{background}$, and $S_{move}$ respectively indicate the correction likelihood for lower-half body occlusion, the correction likelihood for cutoff, the correction likelihood for background erroneous detection, and the correction likelihood for movement. Further, $hip_{position}$, $body_{score}$, $body_{size}$, and $lower_{score}$ indicate the likelihoods relating to lower-half body occlusion based on a hip position, the detection likelihood for the person rectangle, a size of the person rectangle, and the organ detection likelihood, respectively. Further, $shoulder_{edge}$, $hip_{edge}$, $body_{edge}$, and $fullbody_{edge}$ indicate likelihoods relating to cutoff based on the shoulder position, the hip position, the lower end position of the person rectangle, and the lower end position of the full-body rectangle, respectively.

Further, "p" is information indicating the coordinate of the organ position, and a subscript character string indicates a part. Character strings "lshoulder", "rshoulder", "lhip", "rhip", "lknee", "rknee", "lankle", and "rankle" respectively indicate a left shoulder, a right shoulder, a left hip, a right hip, a left knee, a right knee, a left ankle, and a right ankle. Further, "y" indicates a y-coordinate of a joint point, and "score" indicates the organ detection likelihood. "R" is rectangle information, a subscript character string "body" indicates the person rectangle, and a subscript character string "fullbody" indicates the full-body rectangle. Further, "x" indicates a center x-coordinate of the rectangle, "y" indicates a center y-coordinate of the rectangle, "lty" indicates an upper-end y-coordinate, "rby" indicates a lower-end y-coordinate, and "score" indicates the detection likelihood for the rectangle. A superscript indicates the number of frames of the image, "t" indicates information about a current frame, and "t-1" indicates information about a previous frame. Further, "image" indicates image information, and "height" indicates an image height.

The types of the correction labels and the method of determining the correction likelihood described in the present embodiment are illustrative and are not limitative. For example, another correction condition may be defined as a correction label. The correction likelihood may be determined through another calculation method, or the optional number of calculation expressions among the above-described calculation expressions may be used.

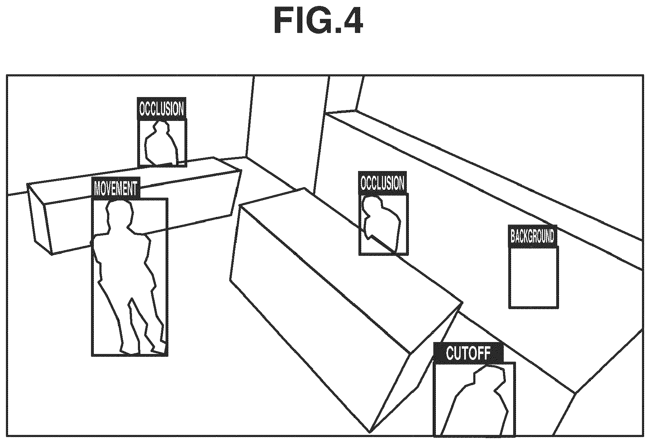

Fig. 4 illustrates an example of a result of determination of the correction conditions. The correction condition determination unit 104 performs correction condition determination on the posture estimation information acquired from the image, thus determining the correction likelihoods for lower-half body occlusion, cutoff, background erroneous detection, and movement. In the example illustrated in Fig. 4, as a result of the determination, the correction labels corresponding to the correction likelihoods greater than preset predetermined thresholds are in association with rectangles detected as persons in the image. In Fig. 4, "occlusion" indicates a correction label for lower-half occlusion, and "background" indicates a correction label for background erroneous detection. The correction condition determination unit 104 transmits the determination result of the correction conditions to the correction unit 105.

The correction unit 105 corrects the information indicating the action acquired from the action recognition unit 103, based on the information indicating the action and the determination result made by the correction condition determination unit 104. More specifically, in a case where the action likelihood corresponding to the action label "falling" is greater than the predetermined threshold and the correction likelihood corresponding to any of the correction labels is greater than the corresponding predetermined threshold, the correction unit 105 changes the action likelihood corresponding to the action label "falling" of the person. At this time, the correction unit 105 corrects the action likelihood corresponding to the action label "falling" to a sufficiently small value, for example, 0.0 or 0.1. Correcting the action likelihood in such a manner prevents the action from not being erroneously recognized as "falling" as a result of the action recognition recognized by the action recognition unit 103. When the correction unit 105 corrects the action likelihood, the correction unit 105 corrects the action likelihood to a value less than the predetermined threshold at which the action is recognized as "falling".

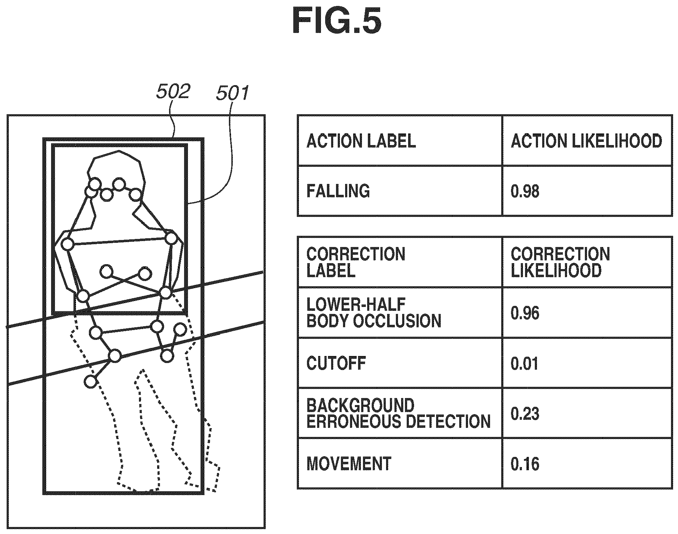

Fig. 5 illustrates an example of the action recognition result to be corrected. A lower-half body of a person in the image is occluded by a shelf, and an area of the occluded lower-half body is illustrated by a broken line in the drawing. In this example, the threshold of the action likelihood for "falling" is assumed to be 0.8, and the threshold of the correction likelihood is assumed to be 0.8. The values of the thresholds are illustrative and are not limited to 0.8. When the posture estimation processing is applied to the image illustrated in Fig. 5, positions of organs of an upper-half body are correctly detected, but positions of organs of the lower-half body are detected at positions different from actual positions. When the action recognition is performed based on the result of the organ detection, the action likelihood corresponding to the action label "falling" is calculated to be 0.98 because the posture is resembled to a falling posture with bent legs. The action likelihood is greater than 0.8 as the threshold. Thus, when the action recognition is performed based on the action likelihood, it is recognized that the person is fallen. Further, in the determination of the correction conditions, the correction likelihood for the correction label "lower-half body occlusion" is calculated to be 0.96 because the y-coordinate of the hip is greater than the lower-end y-coordinate of the person rectangle, and the distance between the y-coordinate of the lower end of the person rectangle 501 and the y-coordinate of the lower end of the full-body rectangle 502 is large. Since the correction likelihood is greater than 0.8 serving as the threshold, the action likelihood is changed to a sufficiently small value, such as 0.0 or 0.1. The correction unit 105 controls output of the information from the output unit 202 depending on the result of the action recognition based on the corrected action likelihood.

The image processing apparatus 100 according to the present embodiment recognizes that the person is fallen, and notifies the user that a fallen person is present, by display, sound, or the like. At this time, for example, when the person, the lower-half body of which is occluded, is recognized as the fallen person, incorrect information is notified to the user. However, the correction unit 105 corrects the action likelihood corresponding to the action label "falling", which makes it possible to prevent the incorrect recognition result from being output. In a case where the action likelihood has been corrected, the correction unit 105 may notify the user that the action likelihood has been corrected, or may omit to perform notification to the user because the fallen person is not recognized.

The configuration of the image processing apparatus 100 according to the present embodiment has been described above. The posture estimation information acquired by the posture estimation unit 102 at least includes the organ position coordinates. In this case, the correction likelihood is calculated based on only the organ position coordinates. The organ positions may be detected using algorithm for directly determining the organ position coordinates from an image, as discussed in Z. Cao, "OpenPose: Realtime Multi-Person 2D Pose Estimation using Part Affinity Fields", CVPR2018. In other words, any method through which information for performing the person action recognition and the correction condition determination is acquirable is applicable as a method of acquiring the posture estimation information, and is not limited to a specific method.

The action recognition unit 103 may store action labels for standing, walking, running, sitting, and the like in addition to falling. In a case where the plurality of action labels is defined, the correction unit 105 may manage the action likelihood for the corresponding action label to be corrected, for each correction label when the correction likelihood is greater than the preset threshold.

In the correction of the action likelihood for the correction unit 105, the highest correction likelihood may be determined among correction likelihoods for the correction labels for lower-half body occlusion, cutoff, background erroneous detection, and movement, and the action likelihood may be weighted with a weight = 1 - correction likelihood. Further, the correction unit 105 may apply the correction only in a case where a period (number of image frames) when the correction likelihood for any of the correction labels for lower-half body occlusion, cutoff, background erroneous detection, and movement is greater than the preset threshold is longer than a preset period.

The correction condition determination unit 104 according to the present embodiment calculates the correction likelihood every time the posture estimation information is acquired; however, the configuration is not limited thereto. For example, the correction condition determination unit 104 may calculate the correction likelihood only in a case where a value of the action likelihood corresponding the predetermined action (falling) acquired based on the posture estimation information is greater than a predetermined value.

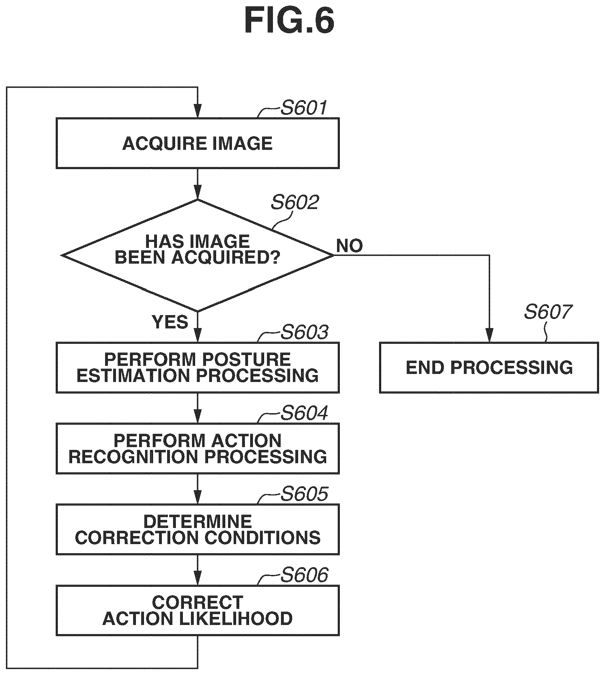

The processing performed by the image processing apparatus 100 according to the present embodiment is described with reference to the flowchart illustrated in Fig. 6. When the CPU 204 of the image processing apparatus 100 reads out the control computer programs stored in the ROM 206 and the HDD 207, loads the control computer programs to the RAM 205, and executes the control computer programs, the processing illustrated in Fig. 6 is performed.

In step S601, the image acquisition unit 101 acquires an image from the imaging apparatus or an internal or external storage device. The image may be acquired through the Internet, other network, or the like. In a case where no image has been acquired (NO in step S602), the processing proceeds to step S607. In step S607, the processing ends. In a case where an image has been acquired (YES in step S602), the processing proceeds to step S603. In step S603, the posture estimation unit 102 performs the posture estimation processing on a person in the image based on the acquired image, to specify organ positions of the person, and acquires the posture estimation information. In a case where a plurality of persons is included in the image, the posture estimation unit 102 performs the posture estimation processing on each of the persons. In step S604, the action recognition unit 103 performs the action recognition processing based on the posture estimation information, thus acquiring the action likelihood and the action likelihood corresponding thereto, as the information indicating the action.

In step S605, the correction condition determination unit 104 determines the correction conditions based on the posture estimation information. The correction unit 105 acquires the information indicating the action and a result of determination regarding the correction conditions. In a case where it is determined that an action of the person is a predetermined action ("falling" in present embodiment) and the person is in a predetermined state indicated by the correction label, the correction unit 105 changes the action likelihood that is the information indicating the action in step S606. The correction unit 105 outputs a result of the action recognition based on the corrected action likelihood, by using the output unit 202. The image processing apparatus 100 repeatedly performs the above-described processing while the image is acquired.

Through the above-described processing, the image processing apparatus 100 can prevent an incorrect action recognition result from being output.

A second embodiment of the present invention will be described. In the second embodiment, a description will be provided of a configuration example in which correction candidate areas in an image are generated based on the posture estimation information, and the correction candidate areas are output to the user. Descriptions of the matters similar to those in the first embodiment are omitted, and only differences will be described. That is to say that the second embodiment may comprises some or all of the same or similar features as the first embodiment and therefore detailed description of the same or similar features will be omitted. Reference numerals will be maintained for the same or similar features.

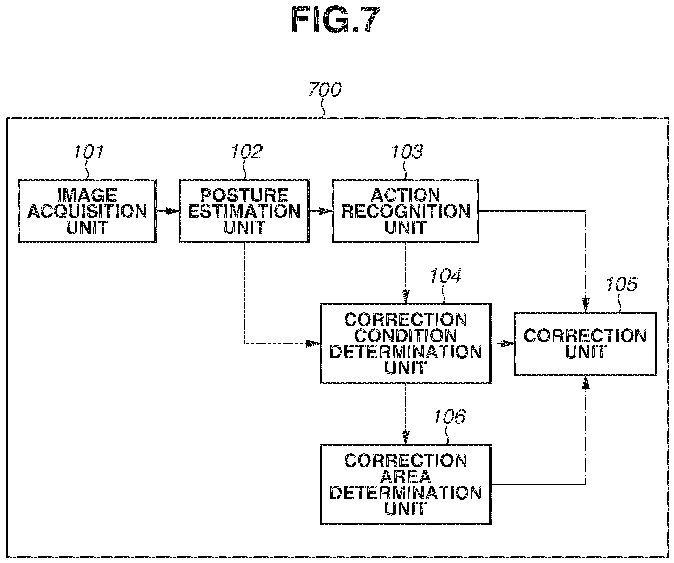

Fig. 7 is a block diagram illustrating a configuration of an image processing apparatus 700 according to the present embodiment. The image processing apparatus 700 includes a correction area determination unit 106 in addition to the configuration of the image processing apparatus 100 according to the first embodiment. The correction condition determination unit 104 transmits the posture estimation information and the determination result of the correction conditions to the correction area determination unit 106.

The correction area determination unit 106 performs area acquisition processing of acquiring correction area information based on the posture estimation information and the result of determination regarding the correction conditions. The correction area information includes information indicating an area where an action of a person is to be changed (corrected) in the image, and a correction objective label. The information indicating the correction area indicates an area in the image, and enables determination whether coordinates in the image is included in the area. For example, the information indicating the correction area may be rectangle information including center coordinates and a width/height, or polygon information including three or more vertices. The correction objective label is at least one correction label for which correction condition determination is performed on a person in the correction area. The correction area determination unit 106 stores the posture estimation information and the result of the determination regarding the correction conditions for a certain period. When data for the certain period is collected, the correction area determination unit 106 generates the correction area information. The correction area determination unit 106 transmits the correction area information to the correction unit 105.

The correction unit 105 corrects the information indicating the action based on the correction area information generated by the correction area determination unit 106, the information indicating the action, and the result of the determination regarding the correction conditions. The correction unit 105 calculates the correction likelihood corresponding to the correction objective label for a person with the center coordinates of the person rectangle thereof included in the correction area. In a case where the correction likelihood is greater than the preset threshold, the correction unit 105 corrects the action likelihood for the action label of the person to a sufficiently small value (e.g., 0.0).

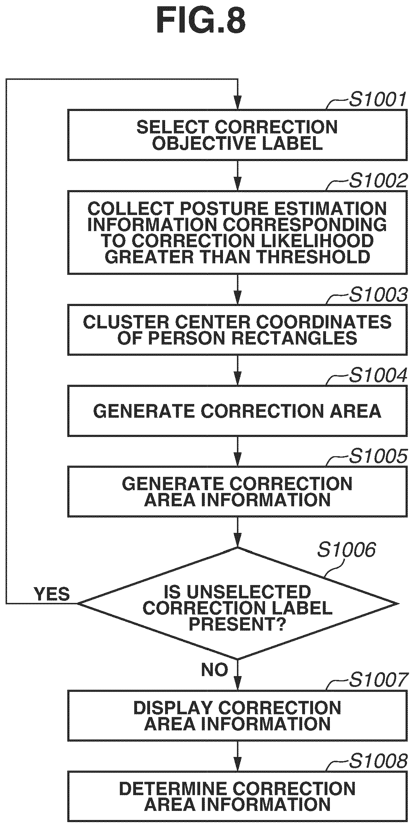

A procedure for generating the correction area information is described with reference to the flowchart illustrated in Fig. 8. In step S1001, the correction area determination unit 106 selects one of the plurality of correction labels as the correction objective label. In step S1002, the correction area determination unit 106 calculates the correction likelihood corresponding to the correction objective label for each of the plurality of persons in the image, and collects and stores the posture estimation information about a person corresponding to the correction likelihood greater than the preset threshold.

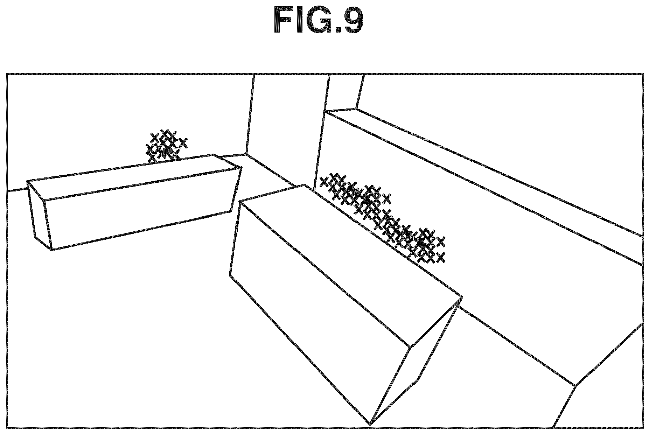

In step S1003, the correction area determination unit 106 clusters the center coordinates of the person rectangles included in the stored posture estimation information. In step S1004, the correction area determination unit 106 generates a correction area including each cluster. In step S1005, the correction area determination unit 106 generates the correction area information by combining the selected correction objective label and the generated information indicating the correction areas. Fig. 9 illustrates an example of center coordinate information about the person rectangles included in the posture estimation information stored when the correction label for lower-half body occlusion is selected as the correction objective label. In Fig. 9, a plotted mark "×" indicates the center coordinate of each of the person rectangles in the image.

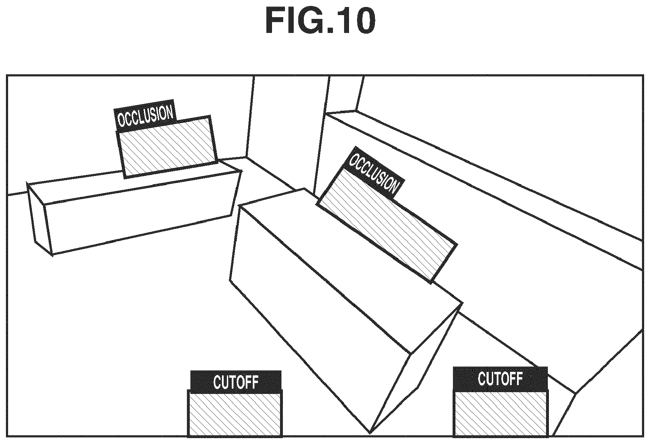

A shelf and a desk are included in the image, so that the posture estimation information about persons behind the shelf and the desk can be determined to be lower-half body occlusion. The correction area determination unit 106 performs clustering of the plurality of marks "×" illustrated in Fig. 9 by using an existing method or the like, thus specifying areas corresponding to the correction objective label "occlusion" illustrated in Fig. 10, as the correction areas.

In a case where a correction label unselected as the correction objective label is present (YES in step S1006), the processing returns to step S1001. In a case where an unselected correction label is absent (NO in step S1006), the processing proceeds to step S1007. The correction area determination unit 106 further selects, for example, the correction label "cutoff" as the correction objective label, and the processing in and after step S1001 is performed to specify correction areas corresponding to the correction objective label "cutoff" in Fig. 10.

In step S1007, the correction area determination unit 106 outputs the generated correction area information by using the output unit 202. In the present embodiment, the correction area information is output to the display device as a display illustrated in Fig. 10. In step S1008, the user designates the correction area information corresponding to an area where the correction is to be performed, by using the input unit 201 while viewing the information displayed on the output unit 202. The correction unit 105 calculates the correction likelihood based on the correction objective label corresponding to the correction area designated to be corrected by the user, and corrects the action likelihood based on the value of the correction likelihood.

With the above-described configuration, the user can instruct whether to execute the correction while visually checking the area where the action is to be corrected. As the information output in step S1007, optional information among the plurality of pieces of posture estimation information stored in the correction area determination unit 106 may be output as an example of a person for which action is to be corrected.

A third embodiment of the present invention will be described. In the third embodiment, a description will be provided as an example of condition setting in the correction condition determination, a configuration example in which the correction conditions used for correction are automatically created based on distribution of matching rates between the information indicating an action and previously set correction conditions. Descriptions of the matters similar to those in the first embodiment are omitted, and only differences are described. That is to say that the third embodiment may comprise some or all of the same or similar features as the first embodiment and therefore detailed description of the same or similar features will be omitted. Reference numerals will be maintained for the same or similar features. The third embodiment may comprise one or more of the features of the second embodiment.

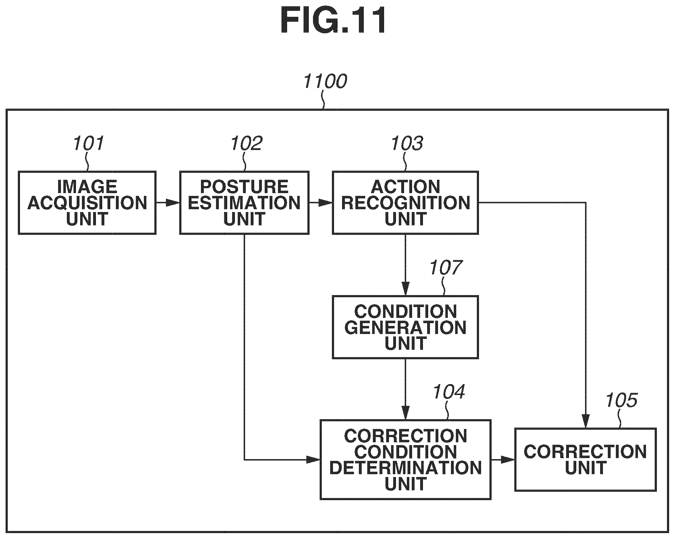

Fig. 11 is a block diagram illustrating a configuration of an image processing apparatus 1100 according to the present embodiment. The image processing apparatus 1100 includes a condition generation unit 107 in addition to the configuration of the image processing apparatus 100 according to the first embodiment.

The action recognition unit 103 transmits, as the information indicating the action, the action label and the action likelihood to the condition generation unit 107. The condition generation unit 107 generates the correction conditions to be applied to the correction condition determination unit 104, based on distribution of the action likelihoods and the correction likelihoods determined based on previously prepared correction conditions. The condition generation unit 107 performs action recognition estimation on a person for a certain period (a certain number of image frames) and stores the action likelihoods. When the action likelihoods for the certain period are collected, the condition generation unit 107 creates a distribution map based on the action likelihoods and the correction likelihoods for the previously prepared correction conditions, and performs clustering on the distribution map. The condition generation unit 107 further performs cluster separation determination by using cluster centers, and generates correction conditions each enabling separation of the clusters, as the correction conditions to be applied in the correction condition determination unit 104. The condition generation unit 107 transmits the generated correction conditions to the correction condition determination unit 104.

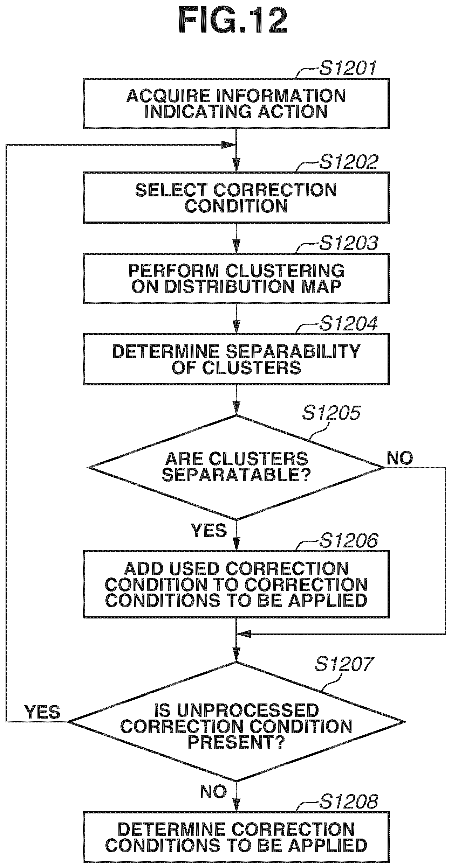

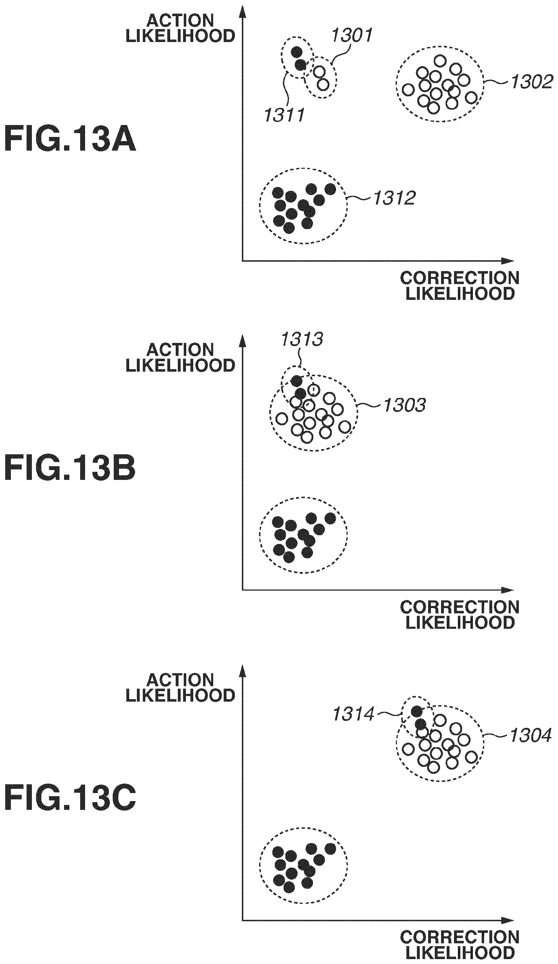

A procedure for generating the correction conditions is described with reference to the flowchart illustrated in Fig. 12. In step S1201, the condition generation unit 107 acquires the information indicating the action collected for the certain period. In step S1202, the condition generation unit 107 selects one of the previously prepared correction conditions. In step S1203, the condition generation unit 107 creates the distribution map based on the correction likelihoods of the selected correction condition and the action likelihoods, and performs clustering on the distribution map. Figs. 13A to 13C illustrate examples obtained by performing clustering using the plurality of correction conditions. The data is plotted and clustered with a lateral axis of a graph set to the correction likelihood corresponding to the selected correction condition and a vertical axis set to the action likelihood corresponding to the action label "falling". While the embodiments shown and discusses certain action labels it will be apparent that other action likelihoods corresponding to other action labels are contemplated.

The clustering is performed with two types of data, namely, a ground truth (GT) cluster and an actual scene cluster.

The GT cluster is a result obtained by clustering the distribution of the action likelihoods based on the posture estimation information with a ground truth action label previously prepared and the correction likelihoods corresponding to the selected correction condition. The GT cluster is determined in units of action labels. The GT cluster in the present embodiment is a cluster generated for the action label "falling". Data on the GT cluster is generated by, for example, previously determining the action likelihoods and the correction likelihoods by using an image group including an image in which a fallen person is present.

The actual scene cluster is a result obtained by clustering the distribution of the action likelihoods and the correction likelihoods corresponding to an image group different from the image group for the GT cluster. No ground truth action label is provided to the actual scene clusters, and the results of the plurality of action labels are included. Thus, the actual scene clusters are clustered to a plurality of clusters. As a clustering method, for example, k-means can be used. At this time, the action label of each of the actual scene clusters may be predicted from predicted occurrence frequencies of the action labels and the number of pieces of data in each of the actual scene clusters.

Figs. 13A to 13C are distribution maps of the action likelihoods and the correction likelihoods created with correction conditions A, B, and C applied. A cluster of open white circles is the actual scene cluster, and a cluster of solid black circles is the GT cluster. For example, in a clustering result of the actual scene with the correction condition A illustrated in Fig. 13A, an actual scene cluster group 1301 that is low in correction likelihood and small in frequency (number of plots), and an actual scene cluster group 1302 that is high in correction likelihood and high in frequency are present. It is predicted that, in the actual scene, the number of persons taking a "falling" action is small. Therefore, the action label "falling" is assigned to the actual scene cluster group 1301.

In contrast, for the actual scene cluster group 1302, the action likelihood for "falling" is high and the frequency is also high; however, considering the prediction that the number of persons taking a falling action is small, the actual scene cluster group 1302 is considered to be the posture estimation information with erroneous "falling" estimation. The GT clusters illustrated in Fig. 13A include a GT cluster group 1311 that is low in correction likelihood and small in frequency, and a GT cluster group 1312 that is low in correction likelihood and low in frequency. The GT clusters are clusters acquired for "falling". Thus, the GT cluster group 1311 is the posture estimation information about a person estimated to "fall" based on high action likelihood, and the GT cluster group 1312 is the posture estimation information about the person estimated to take an action other than "falling". The condition generation unit 107 determines the correction condition enabling separation of the actual scene clusters for the posture estimation information with erroneous action estimation, such as the actual scene cluster group 1302, and the GT clusters for the posture estimation information with "falling" estimation, such as the GT cluster group 1311.

In step S1204, the condition generation unit 107 determines whether the GT clusters and the actual scene clusters are separable, from the result of the clustering. The condition generation unit 107 uses, for example, the values of the action likelihoods and the correction likelihoods as coordinate values, and determines a distance between center coordinates of the clusters. If the distance is greater than or equal to a certain value, i.e. a predetermined value, the condition generation unit 107 determines that the clusters have been separated. It is found from the example illustrated in Fig. 13A that, under the condition A, the actual scene cluster group 1302 high in action likelihood and correction likelihood is separated from the GT cluster group 1311 based on the correction likelihoods.

It is found that, under the correction condition B illustrated in Fig. 13B, a GT cluster group 1313 high in action likelihood is close to an actual scene cluster group 1303 high in frequency, and the clusters are not separated. Similarly, it is found that, under the correction condition C illustrated in Fig. 13C, a GT cluster group 1313 high in action likelihood is close to an actual scene cluster group 1304 high in frequency, and the clusters are not separated. From these results, it is determined that the correction condition A can separate the actual scene clusters and the GT clusters, but the correction conditions B and C cannot separate the actual scene clusters and the GT clusters.

At this time, in a case where an action label is previously predicted and assigned to the actual scene clusters, a combination of clusters having the same action label may be excluded from separation objects. Further, based on the distribution of the correction likelihoods of the clusters determined to be separable, a threshold for correction likelihoods that is used in the correction unit 105 may be determined. In a case where it is determined that the clusters are separable (YES in step S 1205), the processing proceeds to step S1206. In step S1206, the condition generation unit 107 adds the used correction condition to the correction conditions to be applied in the correction condition determination unit 104. In a case where it is determined that the clusters are not separable (NO in step S1205), the processing proceeds to step S1207. In a case where an unprocessed condition is present (YES in step S1207), the processing returns to step S1202. In a case where an unprocessed condition is absent (NO in step S1207), the processing proceeds to step S1208. In step S1208, the condition generation unit 107 determines the correction conditions to be applied in the correction condition determination unit 104 from the result of the processing.

With the above-described configuration, the image processing apparatus 1100 can correct the information indicating the action (action likelihood) by using the appropriate correction conditions.

The above-described embodiments may be freely combined and implemented. Put another way, each embodiment described above and shown in the figures can be implemented solely or as a combination of a plurality of elements or features or components thereof where necessary or where the elements or features or components from individual embodiments in a single embodiment is beneficial. According to the embodiments described, it is possible to prevent an output of an incorrect action recognition as a result of the action recognition using the posture estimation.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

**Claims**

1. An image processing apparatus (100, 1100) comprising:

a specification means (102) configured to specify a position of an organ of a person in an image;
an acquisition means (102) configured to acquire posture estimation information about a posture of the person based on the position of the organ specified by specification means;
an estimation means (103) configured to estimate an action of the person based on the posture estimation information acquired by the acquisition means;
a first determination means (104) configured to determine a state of the person based on the posture estimation information acquired by the acquisition means; and
a change means (105) configured to change information indicating the action of the person estimated by the estimation means in a case where the action of the person estimated by the estimation means is a predetermined action and the first determination means determines that the person is in a predetermined state.

2. The image processing apparatus (100, 1100) according to claim 1,

wherein the estimation means (103) is configured to generate first likelihood information indicating a likelihood for the estimated action of the person as the information indicating the action of the person,
wherein the first determination means (104) is configured to generate second likelihood information indicating a likelihood for the determined state of the person, and
wherein the change means (105) is configured to change the first likelihood information in a case where the likelihood indicated by the first likelihood information is greater than a predetermined threshold and the likelihood indicated by the second likelihood information is greater than a predetermined threshold.

3. The image processing apparatus (100, 1100) according to claim 1 or claim 2, wherein the predetermined action includes a falling action of a person.

4. The image processing apparatus (100, 1100) according to any preceding claim, wherein the predetermined state includes at least any of a state in which a lower-half body of a person is occluded, a state in which a person is cut off in an image, a state where a background is erroneously detected as a person, and a state where a person is moving.

5. The image processing apparatus (100, 1100) according to any preceding claim, wherein the posture estimation information includes positional information indicating the position of the organ specified by the specification means (102).

6. The image processing apparatus (100, 1100) according to claim 5, wherein the posture estimation information includes likelihood information indicating a likelihood for the position of the organ specified by the specification means (102).

7. The image processing apparatus (100, 1100) according to claim 5 or claim 6, wherein the posture estimation information includes information indicating an area including a full body of a person.

8. The image processing apparatus (100, 1100) according to any preceding claim, further comprising an output means (202) configured to output information, wherein the change means (105) is configured to set, in a case where the information indicating the action of the person is changed, an action of a person specified based on the changed information, to a recognition result of the action of the person, and is configured to control output of information performed by the output means based on the recognition result.

9. The image processing apparatus (100, 1100) according to any preceding claim, further comprising an area acquisition means (106) configured to acquire area information indicating an area in which an action of a person is to be changed in an image, based on a plurality of pieces of the posture estimation information acquired by the acquisition means (102).

10. The image processing apparatus (100, 1100) according to claim 2 or any of claims 3 to 9 when dependent upon claim 2, further comprising a second determination means (107) configured to determine the predetermined state, based on the first likelihood information and the second likelihood information acquired based on a first image group including a person estimated to take the predetermined action, and based on the first likelihood information and the second likelihood information acquired based on a second image group different from the first image group, wherein the first determination means (104) is configured to change the information indicating the action of the person estimated by the estimation means in a case where the action of the person estimated by the estimation means (103) is a predetermined action and the first determination means determines that the person is in the predetermined state determined by the second determination means.

11. An image processing method comprising:

specifying (S603) a position of an organ of a person in an image;
acquiring posture estimation information (S603) about a posture of the person based on the specified position of the organ;
estimating an action of the person (S604) based on the acquired posture estimation information;
determining a state of the person (S605) based on the acquired posture estimation information; and
changing information (S606) indicating the estimated action of the person in a case where the estimated action of the person is a predetermined action and it is determined that the person is in a predetermined state.

12. A computer program, which when run by a computer, causes the computer to:

specify a position of an organ of a person in an image;
acquire posture estimation information about a posture of the person based on the specified position of the organ;
estimate an action of the person based on the acquired posture estimation information;
determine a state of the person based on the acquired posture estimation information; and
change information indicating the estimated action of the person in a case where the estimated action of the person is a predetermined action and it is determined that the person is in a predetermined state.

13. A computer program comprising instructions, which when run on one or more processing units, causes the one or more processing units to perform the image processing method of claim 11.

14. A computer-readable storage medium comprising the computer program of claim 13.

# FIG.1

*100*

EP 4 485 388 A1

# FIG.2

100

101
IMAGE
ACQUISITION
UNIT

102
POSTURE
ESTIMATION
UNIT

103
ACTION
RECOGNITION
UNIT

104
CORRECTION
CONDITION
DETERMINATION
UNIT

105
CORRECTION
UNIT

15

# FIG.3

| ACTION LABEL | ACTION LIKELIHOOD |
|---|---|
| FALLING | 0.98 |

# FIG.4

# FIG.5

502  501

| ACTION LABEL | ACTION LIKELIHOOD |
|---|---|
| FALLING | 0.98 |

| CORRECTION LABEL | CORRECTION LIKELIHOOD |
|---|---|
| LOWER-HALF BODY OCCLUSION | 0.96 |
| CUTOFF | 0.01 |
| BACKGROUND ERRONEOUS DETECTION | 0.23 |
| MOVEMENT | 0.16 |

# FIG.6

**ACQUIRE IMAGE** —S601

S602
**HAS IMAGE BEEN ACQUIRED?** — NO → **END PROCESSING** S607

YES

**PERFORM POSTURE ESTIMATION PROCESSING** —S603

**PERFORM ACTION RECOGNITION PROCESSING** —S604

**DETERMINE CORRECTION CONDITIONS** —S605

**CORRECT ACTION LIKELIHOOD** —S606

19

# FIG.7

700

```
101              102              103
IMAGE            POSTURE          ACTION
ACQUISITION  →   ESTIMATION   →   RECOGNITION
UNIT             UNIT             UNIT

                                  104                    105
                 CORRECTION                       CORRECTION
              →  CONDITION      →                 UNIT
                 DETERMINATION
                 UNIT

                 106
                 CORRECTION
                 AREA
                 DETERMINATION
                 UNIT
```

# FIG.8

```
                                                    ┌─S1001
                    ┌──────────────────────────────┐
                    │      SELECT CORRECTION        │
                    │      OBJECTIVE LABEL          │
                    └──────────────────────────────┘
                                    │
                                    ▼               ┌─S1002
                    ┌──────────────────────────────┐
                    │   COLLECT POSTURE ESTIMATION  │
                    │  INFORMATION CORRESPONDING    │
                    │  TO CORRECTION LIKELIHOOD     │
                    │   GREATER THAN THRESHOLD      │
                    └──────────────────────────────┘
                                    │
                                    ▼               ┌─S1003
                    ┌──────────────────────────────┐
                    │  CLUSTER CENTER COORDINATES   │
                    │    OF PERSON RECTANGLES       │
                    └──────────────────────────────┘
                                    │
                                    ▼               ┌─S1004
                    ┌──────────────────────────────┐
                    │   GENERATE CORRECTION AREA    │
                    └──────────────────────────────┘
                                    │
                                    ▼               ┌─S1005
                    ┌──────────────────────────────┐
                    │      GENERATE CORRECTION      │
                    │       AREA INFORMATION        │
                    └──────────────────────────────┘
                                    │
                                    ▼                   S1006
                            ◇ IS UNSELECTED ◇
              YES ──────────◇ CORRECTION LABEL ◇
                            ◇    PRESENT?    ◇
                                    │
                                  NO│                 ┌─S1007
                    ┌──────────────────────────────┐
                    │      DISPLAY CORRECTION       │
                    │       AREA INFORMATION        │
                    └──────────────────────────────┘
                                    │
                                    ▼               ┌─S1008
                    ┌──────────────────────────────┐
                    │     DETERMINE CORRECTION      │
                    │       AREA INFORMATION        │
                    └──────────────────────────────┘
```

# FIG.9

# FIG.10

# FIG.11

1100

```
101                    102                    103
IMAGE                  POSTURE                ACTION
ACQUISITION            ESTIMATION             RECOGNITION
UNIT                   UNIT                   UNIT

                                              107
                                              CONDITION
                                              GENERATION
                                              UNIT

                                   104                        105
                                   CORRECTION                 CORRECTION
                                   CONDITION                  UNIT
                                   DETERMINATION
                                   UNIT
```

# FIG.12

```
                              ┌─S1201
        ┌──────────────────────────┐
        │   ACQUIRE INFORMATION    │
        │   INDICATING ACTION      │
        └──────────────────────────┘
                     │
                     ▼          ┌─S1202
        ┌──────────────────────────┐
        │   SELECT CORRECTION      │
        │   CONDITION              │
        └──────────────────────────┘
                     │
                     ▼          ┌─S1203
        ┌──────────────────────────┐
        │   PERFORM CLUSTERING     │
        │   ON DISTRIBUTION MAP    │
        └──────────────────────────┘
                     │
                     ▼          ┌─S1204
        ┌──────────────────────────┐
        │   DETERMINE SEPARABILITY │
        │   OF CLUSTERS            │
        └──────────────────────────┘
                     │
                     ▼               S1205
              ╱─────────────────╲
             ╱   ARE CLUSTERS     ╲        NO
             ╲   SEPARATABLE?     ╱─────────
              ╲─────────────────╱
                     │ YES
                     ▼          ┌─S1206
        ┌──────────────────────────┐
        │   ADD USED CORRECTION    │
        │   CONDITION TO CORRECTION│
        │   CONDITIONS TO BE APPLIED│
        └──────────────────────────┘
                     │
                     ▼               S1207
              ╱─────────────────╲
    YES      ╱   IS UNPROCESSED   ╲
    ─────────╲   CORRECTION CONDITION
             ╲   PRESENT?        ╱
              ╲─────────────────╱
                     │ NO
                     ▼          ┌─S1208
        ┌──────────────────────────┐
        │   DETERMINE CORRECTION   │
        │   CONDITIONS TO BE APPLIED│
        └──────────────────────────┘
```

FIG.13A

FIG.13B

FIG.13C

Europäisches
Patentamt
European
Patent Office
Office européen
des brevets

# EUROPEAN SEARCH REPORT

**Application Number**

EP 24 18 4452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nater Fabian: "Abnormal Behavior Detection in Surveillance Videos", , 31 December 2012 (2012-12-31), XP093224516, Retrieved from the Internet: URL:https://www.research-collection.ethz.ch/bitstream/handle/20.500.11850/153476/eth-5638-01.pdf?sequence=1&isAllowed=y [retrieved on 2024-11-14] * page 13 * * page 22 - page 27 * * page 60 - page 62 * * figures 2.7, 2.8 * | 1-14 | INV. G06V20/52 |
| A | GREWE LYNNE ET AL: "Occlusion, optimization, emergency response and partial falls in a senior collapse detection system", 20150521, vol. 9474, 21 May 2015 (2015-05-21), pages 947417-947417, XP060054335, DOI: 10.1117/12.2176318 * the whole document * | 1-14 | |
| A | CN 114 596 533 A (NORTHERN INDUSTRIAL UNIV) 7 June 2022 (2022-06-07) * the whole document * | 1-14 | TECHNICAL FIELDS SEARCHED (IPC) G06V |
| A | US 2017/344832 A1 (LEUNG HENRY [US] ET AL) 30 November 2017 (2017-11-30) * the whole document * | 1-14 | |

The present search report has been drawn up for all claims

| Place of search | Date of completion of the search | Examiner |
|---|---|---|
| The Hague | 15 November 2024 | Ionescu, Tudor |

EPO FORM 1503 03.82 (P04C01)

## ANNEX TO THE EUROPEAN SEARCH REPORT
## ON EUROPEAN PATENT APPLICATION NO.

EP 24 18 4452

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| CN 114596533 | A | 07-06-2022 | NONE | | |
| US 2017344832 | A1 | 30-11-2017 | CA | 2834877 A1 | 28-05-2014 |
| | | | US | 2017344832 A1 | 30-11-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. SUN.** Deep High-Resolution Representation Learning for Human Pose Estimation. *CVPR2019*

- **Y. ZHANG.** FairMOT: On the Fairness of Detection and Re-Identification in Multiple Object Tracking. *IJCV2021*